(19) **Europäisches Patentamt**
**European Patent Office**
**Office européen des brevets**

(11) **EP 2 415 708 B1**

(12) **EUROPEAN PATENT SPECIFICATION**

(45) Date of publication and mention
of the grant of the patent:
**20.12.2017 Bulletin 2017/51**

(21) Application number: **10758906.1**

(22) Date of filing: **30.03.2010**

(51) Int Cl.:
**C01B 21/082** (2006.01)   **C01B 21/087** (2006.01)

(86) International application number:
**PCT/JP2010/056115**

(87) International publication number:
**WO 2010/114141 (07.10.2010 Gazette 2010/40)**

(54) **NITROGEN-CONTAINING SILANE COMPOUND POWDER AND METHOD FOR PRODUCING SAME**

STICKSTOFFHALTIGE SILANVPULVERVERBINDUNG UND HERSTELLUNGSVERFAHREN DAFÜR

POUDRE D'UN COMPOSÉ DE SILANE CONTENANT DE L'AZOTE ET SON PROCÉDÉ DE FABRICATION

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **30.03.2009   JP 2009082747**
**30.03.2009   JP 2009082730**

(43) Date of publication of application:
**08.02.2012 Bulletin 2012/06**

(73) Proprietor: **Ube Industries, Ltd.**
**Ube-Shi,**
**Yamaguchi 755-8633 (JP)**

(72) Inventors:
• **NISHIO, Masayuki**
**Ube-shi**
**Yamaguchi 755-8633 (JP)**

• **NIIDA, Sadao**
**Ube-shi**
**Yamaguchi 755-8633 (JP)**
• **SHIMAKAWA, Toshihiro**
**Ube-shi**
**Yamaguchi 755-8633 (JP)**

(74) Representative: **Hoeger, Stellrecht & Partner Patentanwälte mbB**
**Uhlandstrasse 14c**
**70182 Stuttgart (DE)**

(56) References cited:
**EP-A2- 0 228 842      DE-A1- 3 235 304**
**DE-A1- 19 630 114    DE-A1- 19 651 731**
**JP-A- 3 054 105        JP-A- 9 156 912**
**JP-A- 9 221 308        JP-A- 58 055 316**
**JP-A- 62 223 008      US-A- 4 788 049**

**Description**

TECHNICAL FIELD

0001 The present invention relates to a novel nitrogen-containing silane compound powder. More specifically, the present invention relates to a nitrogen-containing silane compound powder useful as a raw material for the production of a silicon nitride powder, and a production process thereof.

BACKGROUND ART

0002 A so-called "imide decomposition method" of producing silicon nitride by pyrolyzing a nitrogen-containing silane compound such as silicon diimide, silicon amide and silicon nitrogen imide is a production process of a silicon nitride powder with little metal impurities and good sinterability, and for the synthesis of a nitrogen-containing silane compound, such as silicon diimide which is an intermediate raw material thereof, several methods are known.

0003 Patent Document 1 discloses a method of supplying, to the lower organic solvent layer of a reaction system allowing liquid ammonia and an organic solvent not miscible with the liquid ammonia and larger in the specific gravity than the liquid ammonia to be separated in two layers due to difference in the specific gravity, a mixed solution of chlorosilane and the organic solvent above, thereby reacting the chlorosilane with the liquid ammonia, wherein the volume ratio of organic solvent/chlorosilane in the mixed solution of chlorosilane and the organic solvent is from 2 to 4.

0004 Patent Document 2 discloses a method of supplying, to the lower organic solvent layer of a reaction system allowing liquid ammonia and an organic solvent not miscible with the liquid ammonia and larger in specific gravity than the liquid ammonia to be separated in two layers due to a difference in the specific gravity, a mixed solution of a halogenated silane and the organic solvent above, thereby reacting the halogenated silane with the liquid ammonia, wherein the volume ratio between the halogenated silane and the liquid ammonia in a stationary state is changed.

0005 Patent Document 3 discloses a method of supplying, to the lower organic solvent layer of a reaction system allowing liquid ammonia and an organic solvent not miscible with the liquid ammonia and larger in the specific gravity than the liquid ammonia to be separated in two layers due to a difference in the specific gravity, a mixed solution of a halogenated silane and the organic solvent above, thereby reacting the halogenated silane with the liquid ammonia, wherein the reaction temperature is controlled.

0006 Patent Document 4 discloses a production process of silicon diimide, including a reaction method of adding dropwise a silicon halide to liquid ammonia from a space of the reaction site, at a temperature of -69 to -33.3°C.

0007 Patent Document 5 discloses a method of reacting an organic aminosilane synthesized according to Patent Document 6 with ammonia under pressure at a temperature of 50 to 300°C to produce silicon diimide.

0008 In the reaction of a halogenated silane and liquid ammonia, an ammonium halide is by-produced in addition to the objective silicon diimide and a nitrogen-containing silane compound mainly composed of silicon diimide. The ammonium halide easily dissolves in liquid ammonia but hardly dissolves in a low-polarity organic solvent not miscible with liquid ammonia. Accordingly, the filtrate after separating by filtration silicon diimide or a nitrogen-containing silane compound mainly composed of silicon diimide from the reaction mixture obtained by the method of Patent Documents 1 to 3 is recovered as a mixture of an organic solvent and liquid ammonia having dissolved therein a byproduct ammonium halide. Recycling of the organic solvent and the liquid ammonia as a reaction raw material is indispensable in view of industrial practice, but there is a problem that a complicated and multistage process is necessary for recycling the liquid ammonia and the organic solvent by purifying and separating them from the above-described mixture.

0009 For example, Patent Document 7 discloses a method of supplying, to the lower organic solvent layer of a reaction system allowing liquid ammonia and an organic solvent not miscible with the liquid ammonia and larger in the specific gravity than the liquid ammonia to be separated in two layers due to difference in the specific gravity, a mixed solution of a halogenated silane and the organic solvent above, thereby reacting the halogenated silane with the liquid ammonia to produce a nitrogen-containing silane compound, wherein in a step of, after separation of the nitrogen-containing silane compound from the reaction mixture, supplying a mixed liquid comprised of the organic solvent, the liquid ammonia dissolving the by-produced ammonium halide to a thin-film evaporator to separate and recover respective components, water in an amount of 2.3 to 20.0 vol% based on the mixed liquid is added. According to this method, ammonia is taken from the top of the evaporator, and a mixture of the organic solvent, the ammonium halide and water having mixed therein a small amount of ammonia is recovered in the bottom liquid. The organic solvent must be then separated from the mixture, and it is suggested that the separation can be performed by standing separation or the like method. However, the halogenated silane has a property of readily undergoing hydrolysis and therefore, for practically realizing recycling as a solvent that is mixed with a halogenated silane, a further purification step to remove water or the like intermixed in a small amount is indispensable. As thus illustrated, for respectively recovering and recycling ammonia and an organic solvent from a mixed solution of an organic solvent, liquid ammonia and a by-produced ammonium halide, a complicated and multistage separation/purification process is required.

0010 In order to avoid such a problem, it is desired to directly react a halogenated silane and liquid ammonia without using an organic solvent. Also, for reducing the facility cost in the above-described complicated recovery process, it is also an effective technique to use an organic solvent in an amount as small as possible and thereby advance downscaling of equipment.

0011 In the method disclosed in Patent Document 4, an organic solvent is surely not used, but an extremely low temperature of -69 to -33.3°C, preferably -65°C, is necessary. Therefore, a cryogenic refrigerant system is required, and this is significantly unprofitable as an industrial production process.

0012 On the other hand, as for the reaction of a liquid halogenated silane and liquid ammonia in the vicinity of ordinary temperature, as described, for example, in Patent Document 5, the by-produced ammonium halide may clog the reaction apparatus, and the specific method for directly mixing and reacting a halogenated silane and liquid ammonia is neither disclosed nor suggested at present.

0013 In addition, in Patent Document 1, it is stated that when the volume ratio of organic solvent/chlorosilane in the mixed solution of chlorosilane and an organic solvent is set to be less than 2, specifically, for example, set to 1.5, the chlorine portion in the product can be hardly removed by washing, and there can be pointed out the existence of a technical problem to be solved for producing a nitrogen-containing silane compound powder having a small halogen portion and a high purity and being mainly composed of silicon diimide under conditions of not using an organic solvent or reducing the amount thereof. Also, as for the silicon diimide obtained in Patent Document 4 describing a method of performing the reaction at an extremely low temperature under conditions of not using an organic solvent, a purity of 99.98% or more is only described as an example of the best purity, but the content of the chlorine portion at this time is not set indicated.

0014 The organic aminosilane as a raw material in the method of Patent Document 5 needs to be separately produced, for example, according to Patent Document 6 by reacting methylamine and $SiCl_4$ diluted with petroleum ether at a temperature of -20°C or less. Also, from the industrial point of view, it is common to recycle the organic amine by-produced in the method of Patent Document 5 for the synthesis of an organic aminosilane. The production process of silicon diimide of Patent Document 5 is a technology practiced in combination with the synthesis method of an organic aminosilane disclosed in Patent Document 6, and this inevitably involves a multistage/complicated process and cannot be efficient.

0015 As another problem relevant to the methods of Patent Documents 1 to 3, the apparent density of the obtained silicon diimide or the nitrogen-containing silane compound mainly composed of silicon diimide is low. The apparent density of the silicon diimide obtained in Patent Document 2 is 0.062 $g/cm^3$ at most, and that of the nitrogen-containing silane compound mainly composed of silicon diimide obtained in Patent Document 3 is 0.090 $g/cm^3$ at most. In both cases, the apparent density is low, and there is room for improvement. Due to the low apparent density, as illustrated in the following two steps, a problem of non-profitability with a low utilization ratio per volume of the production apparatus exists.

0016 First, there is a problem that the filtration/washing step is inefficient. In the slurry obtained in the reaction described in Patent Documents 1 to 3, the solid phase contains silicon diimide or a nitrogen-containing silane compound mainly composed of silicon diimide, and the liquid phase contains the by-produced ammonium halide as a solute and is comprised of the liquid ammonia and the organic solvent. The ammonium halide is by-produced in a large amount (in the case of using a tetrahalosilane, the amount is theoretically 4 molar times the amount of silicon diimide) and therefore, this ammonium halide must be removed by introducing the slurry into a filter and performing washing/filtration using liquid ammonia.

0017 At this time, according to Non-Patent Document 1, in the washing of a cake resulting from slurrification, the solute concentration $C_N$ in the wet filtercake discharged from the filter of the $N_W$-th plate in a co-current filtration/washing apparatus using a stirring tank and having $N_W$ plates in total is determined by the following formula 1:

$$C_N \ = \ C_W \ + \ \frac{C_0 - C_W}{\left[1 + \dfrac{V_W}{N_W V_V}\right]^{N_W}} \qquad \text{(formula 1)}$$

$C_0$: the solute concentration in mother solution before washing,
$C_W$: the solute concentration in washing solution supplied,
$V_W$: the amount of washing solution supplied to the apparatus per unit time, and
$V_V$: the amount of filtrate in the cake.

0018 In the filtration/washing of silicon diimide or a nitrogen-containing silane compound mainly composed of silicon diimide obtained by the reaction described in Patent Documents 1 to 3, the by-produced ammonium halide comes under the solute above. When the apparent density of the silicon diimide or the nitrogen-containing silane compound mainly composed of silicon diimide is low, the amount of pores per filtercake is increased and $V_V$ in formula 1 becomes large. At this time, in comparison with washing of a cake having a high apparent density and a small $V_V$, it is understood from formula 1 that for achieving the same solute concentration $C_N$ with the same $N_W$ plates, the amount $V_W$ of the washing solution supplied to the apparatus need to be more increased, revealing that the low apparent density impairs the efficiency of the washing step.

0019 Secondly, there is a problem that the volume efficiency in the heating step is low. In the imide decomposition method, the obtained silicon diimide or nitrogen-containing silane compound mainly composed of silicon diimide is heated through stages, whereby a silicon nitride powder is produced. According to the methods of Patent Documents 2 and 3, the silicon diimide or the nitrogen-containing silane compound mainly composed of silicon diimide is first calcined at a temperature of 600 to 1,200°C to derive an amorphous silicon nitride powder. At this time, when the apparent density of the silicon diimide or nitrogen-containing silane compound mainly composed of silicon diimide is low, for example, the weight fillable per unit volume of the heating crucible is decreased to give a low production amount per consumption energy and this is not efficient.

0020 On the other hand, Patent Document 8 discloses a production process of a silicon nitride powder, wherein a nitrogen-containing silane compound is pressure-formed or granulated and then subjected to a heating step as a compact or powder having a bulk density of 0.1 g/cm$^3$ or more in terms of silicon. Assuming that the compositional formula of silicon diimide is Si(NH)$_2$, this method corresponds to preparing a compact or powder having an apparent density of silicon diimide of 0.2 g/cm$^3$ or more and may be considered to be a technology for improving the volume efficiency in the heating step above, but there is a problem that in practicing the method, an additional step or facility for pressure forming or granulating silicon diimide or a nitrogen-containing silane compound mainly composed of silicon diimide is required and production cost increases.

DE 32 35 304 A1 discloses an $\alpha$ type silicon nitride powder of high purity consisting only of granular crystals, which is obtained by thermal decomposition of a nitrogen-containing silane compound containing at least 0.1 g/cm$^3$ silicon.

US 4,788,049 discloses a method for producing silicon nitride wherein the crystal morphology is controlled.

EP 0 228 842 A2 discloses a method of making an ultrapure silicon nitride precursor.


RELATED ART

PATENT DOCUMENT

0021

Patent Document 1: Japanese Patent No. 3,077,870, specification
Patent Document 2: Japanese Patent No. 3,475,614
Patent Document 3: Japanese Patent No. 3,550,919
Patent Document 4: Japanese Unexamined Patent Publication (Kokai) No. 62-223008
Patent Document 5: Kokai No. 4-265211
Patent Document 6: Kokai No. 5-59186
Patent Document 7: Kokai No. 7-223811
Patent Document 8: Japanese Examined Patent Publication (Kokoku) No. 61-11886


NON-PATENT DOCUMENT

Non-Patent Document 1: Kagaku Kogaku Binran (Chemical Engineering Handbook), pp. 707-708, compiled by The Society of Chemical Engineers, Japan, 5th Revision, Maruzene


SUMMARY OF THE INVENTION

PROBLEMS TO BE SOLVED BY THE INVENTION

0022 The present invention has been made by taking into consideration the problems of conventional techniques. That is, an object of the present invention is, in the production of a nitrogen-containing silane compound by the reaction of a halogenated silane and liquid ammonia, to dispense with or downscale the step for recovering an organic solvent, provide a nitrogen-containing silane compound having a high apparent density, enhance the efficiency in the filtration/washing step or heating step without passing through an additional step such as pressure forming, and increase the productivity in the production process of silicon nitride.

0023 Another object of the present invention is, in the production of a nitrogen-containing silane compound by the reaction of a halogenated silane and liquid ammonia, to provide a high-purity nitrogen-containing silane compound having a small halogen impurity content and a high apparent density under conditions where an organic solvent is not used or the amount thereof is reduced.

MEANS TO SOLVE THE PROBLEMS

0024 As a result of intensive studies on the reaction of a halogenated silane and liquid ammonia so as to attain the above-described objects, the present inventors have found that when at the time of mixing and reacting a halogenated silane and liquid ammonia, a discharge port of piping for supplying the halogenated silane is disposed in the liquid ammonia and preferably, the discharge linear velocity is set to 5 cm/sec or more, the halogenated silane can be supplied without using a solvent or as an inert organic solvent solution having a halogenated silane concentration of 50 vol% or more and the amount of an organic solvent used can be made zero or greatly reduced. In addition, it has been found that surprisingly, the apparent density of the nitrogen-containing silane compound powder obtained through washing with liquid ammonia and drying after the reaction under the above-described conditions is greatly higher than that of conventional powders. The present invention has been accomplished based on these findings.

0025 The present inventors have also found that when at the time of mixing and reacting a halogenated silane and liquid ammonia by the method above, the pressure in a reactor is maintained higher by 0.5 MPa or more than the vapor pressure of liquid ammonia at the temperature of the reaction mixture contained in the reactor by introducing an inert gas into the reactor, a high-purity nitrogen-containing silane compound having a small halogen impurity content is obtained even under conditions where the volume ratio of organic solvent/halogenated silane is 1 or less.

0026 That is, the present invention relates to a nitrogen-containing silane compound powder represented by the formula $Si(NH_x)_y$, wherein x is from 0.7 to 1.3 and y is from 1.8 to 2.2, obtained by reacting a halogenated silane compound and

liquid ammonia and subjecting the reaction product to washing with liquid ammonia and drying, wherein the apparent density after the drying is from 0.10 to 0.30 $g/cm^3$, and wherein the carbon content is less than 0.03 wt%. This nitrogen-containing silane compound is a compound generally also referred to as silicon diimide (details are described later).

0027 Also, the present invention relates to the nitrogen-containing silane compound powder, wherein the apparent density after the drying is from 0.12 to 0.25 $g/cm^3$.

0028 Also, the present invention relates to the nitrogen-containing silane compound powder, wherein the concentration of the halogen portion contained is 100 ppm or less on a weight basis.

0029 Furthermore, the present invention relates to a process for producing a nitrogen-containing silane compound powder represented by the formula $Si(NH_x)_y$, wherein x is from 0.7 to 1.3 and y is from 1.8 to 2.2, the process comprising, at the time of mixing and reacting a halogenated silane compound and liquid

ammonia, supplying a halogenated silane compound without using a solvent or as an inert organic solvent solution having a halogenated silane compound concentration of 50 vol% or more by discharging it from a supply port disposed in liquid ammonia.

0030 Also, the present invention relates to the process for producing a nitrogen-containing silane compound powder, wherein the discharge linear velocity when supplying a halogenated silane compound without using a solvent or as an inert organic solvent solution having a halogenated silane compound concentration of 50 vol% or more is set to 5 cm/sec or more.

Also, the present invention relates to the process for producing a nitrogen-containing silane compound powder, wherein the pressure in a reactor is maintained higher by 0.5 MPa or more than the vapor pressure of liquid ammonia at the temperature of the reaction mixture contained in the reactor by introducing an inert gas into the reactor.

EFFECTS OF THE INVENTION

0031 In the nitrogen-containing silane compound powder of the present invention, the apparent density is remarkably increased, so that $V_V$ in formula 1 can be made small and washing and removal of ammonium halide can proceed efficiently.

Also, the volume efficiency in the heating step can be greatly improved without passing through an additional step such as pressure forming. For example, using r calculated according to the following formula 2, compared with the conventional nitrogen-containing silane compound not passing through a pressure forming step, an r-fold weight can be filled when the heating crucible has the same volume, and in the case of performing heating with the same weight, the crucible size can be reduced to a 1/r volume.

$$r = \text{(Apparent density of nitrogen-containing silane}$$
$$\text{compound powder of the present invention)/(apparent}$$
$$\text{density of conventional nitrogen-containing silane}$$
$$\text{compound powder not passing through press forming step)}$$
$$\text{(formula 2)}$$

Therefore, the efficiency in the filtration/washing or heating step can be increased and the productivity in the production of a silicon nitride powder can be enhanced.

Furthermore, in the production process of a nitrogen-containing silane compound powder of the present invention, not only the above-described excellent nitrogen-containing silane compound powder can be obtained but also the reaction of a halogenated silane and liquid ammonia can be performed under conditions where an organic solvent is not used or the amount used thereof is reduced. In turn, the powder can have a characteristic feature that the carbon content is low, and a step for recovering an organic solvent can be dispensed with or downscaled.

BRIEF DESCRIPTION OF THE DRAWINGS

0032 Fig. 1 is a schematic view showing one embodiment of the reaction apparatus used in the production process of the present invention.

MODE FOR CARRYING OUT THE INVENTION

0033 The present invention is described in detail below.

0034 The present invention relates to a nitrogen-containing silane compound powder obtained by reacting a halogenated silane compound and liquid ammonia and subjecting the reaction product to washing with liquid ammonia and drying, wherein the apparent density after the drying is from 0.10 to 0.30 g/cm$^3$. The nitrogen-containing silane compound powder of the present invention can be synthesized by, at the reaction of a halogenated silane and liquid ammonia, supplying a halogenated silane without using a solvent or as a solution after dilution with a small amount of an organic solvent.

0035 In a preferred embodiment, the present invention relates to the production of a nitrogen-containing silane compound powder, wherein the apparent density after reacting a halogenated silane compound and liquid ammonia and subjecting the reaction product to washing with liquid ammonia and drying is from 0.10 to 0.30 g/cm$^3$ and the concentration of the halogen portion contained is 100 ppm or less on a weight basis. This preferred nitrogen-containing silane compound powder of the present invention can be synthesized by introducing an inert gas into a reactor so as to keep the pressure in the reactor higher by 0.5 MPa or more than the vapor pressure of liquid ammonia at the temperature of the reaction mixture contained in the reactor, allowing a discharge port of piping for supplying the halogenated silane to be disposed in the liquid ammonia, and supplying the halogenated silane without using a solvent or as an inert organic solvent solution having a halogenated silane concentration of 50 vol% or more.

0036 The nitrogen-containing silane compound of the present invention is generally also called silicon diimide and is an Si-N-H-based compound capable of existing in a form represented various compositional formulae such as $Si_6N_{13}H_{15}$, $Si_6N_{12}H_{12}$ and $Si_6N_{11}H_9$ by readily absorbing or releasing $NH_3$ even in the vicinity of room temperature. This nitrogen-containing silane compound or silicon diimide is represented by formula $Si(NH)_2$ in many cases but considering as a compound having an imino group or an amino group bonded to silicon, represented by chemical formula $Si(NH_x)_y$. In this formula, x is from 0.7 to 1.3 and y is from 1.8 to 2.2. 0037

As the halogenated silane for use in the present invention, a fluorinated silane such as $SiF_4$, $H_2SiF_6$, $HSiF_3$, $H_3SiF_5H_3SiF$ and $H_5SiF_3$, a chlorinated silane such as $SiCl_4$, $HSiCl_3$, $H_2SiCl_2$ and $H_3SiCl$, a brominated silane such as $SiBr_4$, $HSiBr_3$, $H_2SiBr_2$ and $H_3SiBr$, and an iodinated silane such as $SiI_4$, $HSiI_3$, $H_2SiI_2$ and $H_3SiI$ can be used. Also, a halogenated silane such as $RSiX_3$, $R_2SiX_2$ and $R_3SiX$ (R is an alkyl or alkoxy group, and X is a halogen) may be used.

0038 In the implementation of the present invention, the halogenated silane can be supplied without using a solvent or as a solution after dilution with a small amount of an organic solvent. In the case of supplying the halogenated silane without using a solvent, the filtrate obtained by separating by filtration the produced nitrogen-containing silane compound powder from the reaction slurry consists of only two components, i.e., liquid ammonia and ammonium halide dissolved therein. Therefore, this supply is added with an advantage that the recovery/recycle of liquid ammonia can be performed by a simpler process than in the supply after dilution with an organic solvent.

0039 The organic solvent used for diluting the halogenated silane may be appropriately selected from those capable of dissolving the halogenated silane and nonreactive with the halogenated silane or liquid ammonia. Examples thereof include a chain aliphatic hydrocarbon having a carbon number of 5 to 12, such as n-pentane, n-hexane, n-heptane and n-octane, a cyclic aliphatic hydrocarbon such as cyclohexane and cyclooctane, and an aromatic hydrocarbon such as toluene and xylene.

0040 The halogenated silane concentration in the mixed solution of organic solvent and halogenated silane is preferably 50 vol% or more, more preferably 66 vol% or more, still more preferably 75 vol% or more. If the concentration is less than 50 vol%, the produced nitrogen-containing silane compound powder cannot be sufficiently increased in the apparent density.

0041 In the implementation of the present invention, discharge port when supplying the halogenated silane without using a solvent or as a solution after dilution with a small amount of an organic solvent is disposed in the liquid ammonia within a reactor. At this time, the discharge linear velocity from the supply port is preferably maintained at 5 cm/sec or more. If the linear velocity is not sufficiently high, a slight amount of ammonia is liable to diffuse and intrude into the inside of the supply piping from the discharge port. As a result, clogging of the supply piping due to production or by-production of a nitrogen silane compound or precipitation of ammonium halide readily occurs in the vicinity of the discharge port and this is not practical. The discharge linear velocity from the supply port is more preferably maintained at 8 cm/sec or more. The upper limit is not particularly limited as long as the apparatus allows it, but the linear velocity may be generally 200 cm/sec or less.

0042 In the implementation of the present invention, when an inert gas is not introduced and most of the pressure in the reactor is occupied by the vapor pressure of liquid ammonia, the large reaction heat generated at the synthesis of a nitrogen-containing silane compound can be removed as an evaporation latent heat of the liquid ammonia existing in the neighborhood. However, in a preferred embodiment of the present invention, when an inert gas is introduced into the reactor to apply pressure, since the boiling point of the liquid ammonia in the reactor is increased and removal of heat by an evaporation latent heat of liquid ammonia cannot be expected, forced cooling by the use of a jacket, a heat exchanger or the like must be performed. Due to such a difference, the preferred reaction temperature or pressure varies depending on the presence or absence of a pressurizing operation by the introduction of an inert gas into the reactor. These are described for respective cases in sequence.

0043 In the case of practicing the present invention without introducing an inert gas into the reactor, the reaction temperature can be selected in the range from low temperature to ordinary temperature according to the equipment, but when a high reaction temperature is set, the vapor pressure of liquid ammonia rises and the pressure spec of the reactor needs to be made high. On the other hand, when an excessively low reaction temperature is set, an overload is imposed on the refrigerant system for maintaining the temperature. The appropriate reaction temperature is from -10 to 40°C, preferably from 0 to 30°C.

0044 In the case of practicing the present invention without introducing an inert gas into the reactor, the pressure is substantially defined by the vapor pressure of liquid ammonia occupying a great part of the reaction slurry. The vapor pressure of liquid ammonia in the reaction slurry depends on the reaction temperature and therefore, the pressure at which the reaction is performed takes a value corresponding to the reaction temperature. The pressure is preferably from 0.3 to 1.6 MPa, more preferably from 0.4 to 1.6 MPa (absolute pressure). Under the pressure conditions set in this way, the liquid ammonia is present at a temperature near the boiling point and the large reaction heat generated at the synthesis of a nitrogen-containing silane compound can be absorbed when the ammonia existing in the neighborhood evaporates.

0045 In the case of practicing the present invention by introducing an inert gas into the reactor, which is a preferred embodiment, the reaction temperature may be selected in the range from low temperature to ordinary temperature according to the equipment spec, but when a high reaction temperature is set, the vapor pressure of liquid ammonia rises and the design pressure of the reactor needs to be made high. On the other hand, when an excessively low reaction temperature is set, an overload is imposed on the heat exchanger and the refrigerant system for maintaining the temperature. The appropriate reaction temperature is from -10 to 50°C, preferably from 0 to 40°C.

0046 In the case of practicing the present invention by introducing an inert gas into the reactor, which is a preferred embodiment, the pressure in the reactor is maintained higher than the vapor pressure of liquid ammonia at the temperature of the reaction mixture in the reactor by the introduction of an inert gas. Assuming that the pressure added to the reactor by the introduction of an inert gas is $\Delta P$, the $\Delta P$ is preferably 0.5 MPa or more, more preferably 0.7 MPa or more. Incidentally, the pressure in the reactor can be determined from the sum of the vapor pressure of liquid ammonia at the temperature of the reaction mixture and $\Delta P$. If the $\Delta P$ is small, a halogen portion in a form that cannot be removed by washing with liquid ammonia may be increased in the product and therefore, a high-purity nitrogen-containing silane compound powder having a small halogen impurity content cannot be produced. Incidentally, the specific form of the halogen portion, which cannot be removed by washing with liquid ammonia, is not clearly known, but it is considered that halogen chemically bonded to silicon is remaining unreacted in a state of being physically shielded inside a grain of the produced nitrogen-containing silane compound.

0047 In the case of applying a pressure by introducing an inert gas into the reactor, which is a preferred mode for carrying out the present invention, the reaction heat can be removed by a jacket or a heat exchanger attached to the reactor. The heat exchanger may be used by appropriately selecting it from general heat exchangers such as double pipe type, multi-pipe type and plate type. The heat exchanger may be disposed inside or outside the reactor, but when the reaction mixture containing liquid ammonia as the main component is externally circulated by a pump or the like, this is cumbersome and it is simpler and easier to dispose the heat exchanger inside the reactor. In the case of using a stirring tank as the reactor, the internal heat exchanger includes a coil- or calandria-type heat exchanger.

0048 In a preferred embodiment of the present invention, an inert gas is introduced into the reactor to apply pressure, whereby the content of a halogen portion in the product, which is in a form incapable of being removed by washing with liquid ammonia, can be reduced. The reason therefor is not clearly known but is considered because generation of gaseous ammonia in a reaction field, i.e., a region where grain growth of the nitrogen-containing silane compound is proceeding, can be suppressed. In Patent Document 1, it is stated that when the volume ratio of organic solvent/chlorosilane in the mixed solution of chlorosilane and an organic solvent is set to be less than 2, specifically, for example, set to 1.5, the chlorine portion in the product can be hardly removed by washing. When the content of an organic solvent is reduced and the concentration of the supplied chlorosilane is made high, the reaction field is more locally concentrated and the amount of gaseous ammonia per reaction field is relatively increased. As a result, a part of the grain surface of the nitrogen-containing silane compound in the growth process comes into contact with gaseous ammonia, but not with liquid ammonia. It is presumed that the gaseous ammonia is lean in the ammonia concentration per space and therefore, a part of the halogen chemically bonded to silicon present on the grain surface cannot contact with an ammonia molecule, remains unreacted and becomes in a state of being physically shielded inside of the grain as the grain growth proceeds, which forms a halogen portion in a form that cannot be removed by the washing with liquid ammonia. This is also understood to reveal that inversely, when the halogenated silane is supplied after thoroughly diluting it with an organic solvent, a more rarefied reaction field can be created and the amount of gaseous ammonia per reaction field can be reduced, as a result, even under conditions of removing the reaction heat by the evaporation latent heat of liquid ammonia, a product with a small halogen portion can be obtained.

0049 It is considered that under conditions of supplying the halogenated silane without using a solvent or as a solution after dilution with a small amount of an organic solvent, compared with the method of Patent Document 1, the reaction field is more locally concentrated and the amount of gaseous ammonia per reaction field is more increased. Here, when the boiling point of liquid ammonia in the reactor is raised by the method of introducing an inert gas into the reactor to apply pressure, which is a preferred embodiment of the present invention, gasification of liquid ammonia due to reaction heat is suppressed and the amount of gaseous ammonia per reaction field can be reduced. This is considered to make it possible to reduce the content of a halogen portion in the product, which is in a form that cannot be removed by washing with liquid ammonia.

0050 In the implementation of the present invention, the discharge pressure of a supply pump when supplying the halogenated silane without using a solvent or as a solution after dilution with a small amount of an organic solvent is not limited but is preferably set to create a sufficiently large pressure difference. For example, the pump preferably has a device capacity capable of creating a pressure difference of 5.9 MPa or more, more preferably 7.8 MPa or more, still more preferably 9.8 MPa or more, from the pressure of the reactor. If the pressure difference is not sufficiently large, the desired discharge linear velocity may not be ensured. By having the above-described device capacity, precipitation of by-produced ammonium halide resulting from scattering in a fumed form in the reactor and clogging of the halogenated silane supply piping can be avoided, which are conventionally pointed out.

0051 In the present invention, the mixing ratio between halogenated silane and liquid ammonia in the reactor i.e., volume of halogenated silane/volume of liquid ammonia, is from 0.01 to 0.1. The mode for performing the reaction is not particularly limited and may be a batch system or a continuous system. The mixing ratio above indicates, in the case of performing the reaction in a batch system, the ratio between the total amount of halogenated silane and the total amount of liquid ammonia supplied to the reactor per 1 batch, and in the case of a continuous system, indicates the ratio between the volume flow rate of halogenated silane and the volume flow rate of liquid ammonia in a steady operation state. If the mixing ratio exceeds 0.1, the viscosity of the reaction slurry is excessively increased and mixing with stirring in the reactor becomes difficult, whereas if the mixing ratio is too small, the productivity per reactor is disadvantageously decreased.

0052 The nitrogen-containing silane compound produced in the present invention is characterized in that, as described above, the apparent density after production is from 0.10 to 0.30 $g/cm^3$, and in addition, the true density is generally set to be preferably from 1.4 to 1.9 $g/cm^3$, more preferably from 1.5 to 1.7 $g/cm^3$, though the present invention is not limited thereto.

0053 The nitrogen-containing silane compound produced in a preferred embodiment of the present invention, where the inside of the reactor is pressurized with an inert gas, is characterized in that, as described above, the apparent density after production is from 0.10 to 0.30 $g/cm^3$ and the concentration of the halogen portion contained is 100 ppm or less on a weight basis. The concentration may be preferably 70 ppm or less, more preferably 40 ppm or less.

0054 The specific surface area of the nitrogen-containing silane compound produced in the present invention is, in the case of performing the reaction without introducing an inert gas into the reactor, from 700 to 1,100 $m^2/g$,

preferably from 800 to 1,000 m$^2$/g. In the case of practicing the present invention in a preferred embodiment of pressurizing the inside of the rector with an inert gas, the specific surface area is from 900 to 1,300 m$^2$/g, preferably from 900 to 1,200 m$^2$/g.

0055 The carbon content of the nitrogen-containing silane compound produced in the present invention may be 0.03 wt% or less. At the reaction with liquid ammonia, the halogenated silane is supplied without using a solvent or as a solution after dilution with a small amount of an organic solvent, and in the case of being supplied without using a solvent, the product contains substantially no carbon. Accordingly, it is easy for the produced nitrogen-containing silane compound to have a carbon content of 0.01 wt% or less, or 0.001 wt% or less. Also in the case of being supplied after dilution with an organic solvent, the amount of the organic solvent used is small and therefore, the carbon content in the produced nitrogen-containing silane compound can be made to be less than 0.03 wt%.

0056 The nitrogen-containing silane compound produced in the present invention is fundamentally free from oxygen or metal impurities, because a halogenated silane and liquid ammonia are used as raw material. However, in practice, for example, a trace water attached to the apparatus surface or contained in the liquid ammonia or a metal material constituting the production apparatus acts as an oxygen source or a metal impurity source, respectively, and in general, it is preferred that the oxygen content is 2 wt% or less and a metal content is 0.01 wt% or less, although the present invention is not limited thereto.

EXAMPLES

0057 The present invention is described in greater detail below by referring to Examples and Comparative Examples.

0058

<Example 1>

In the reaction, an SUS-made pressure-resistant reactor with a jacket, which is equipped with a stirring device and a condenser and has an inner volume of about 2 L, was used. After purging the inside of the reactor with a nitrogen gas, 1 L of liquid ammonia was charged thereinto. Subsequently, while rotating the stirring blade at 400 rpm, 50 mL of SiCl$_4$ which was not diluted with an organic solvent was supplied by a pump and subjected to a reaction in a batch system. An SUS-made nozzle having an inner diameter of 0.8 mm, disposed in the liquid ammonia, was used for the supply of SiCl$_4$. The entire amount of 50 mL of SiCl$_4$ was supplied by setting the upper limit of discharge pressure of the pump to 6.9 MPa (gauge pressure) and the volume flow rate to 2.5 mL/min. During the supply of SiCl$_4$, the temperature of the reaction mixture was from 18 to 20°C, the pressure in the reactor was from 0.7 to 0.8 MPa (gauge pressure), and the pressure of the supply piping reached 5.7 MPa (gauge pressure) at a maximum.

0059 After the completion of reaction, the produced slurry was transferred to an SUS-made pressure-resistant vessel (Nutche type) having an inner volume of about 2 L and equipped with a stirring device and a sintered metal filter and filtered. The obtained wet cake was further batch-washed with about 1 L of liquid ammonia and then filtered. This washing/filtration operation was repeated 7 times in total. 0060

The thus-obtained wet cake was dried to obtain a nitrogen-containing silane compound powder. In the drying operation, the cake was heated by flowing hot water at 90°C through the jacket of the filtration tank and by keeping the pressure in the tank at 0.6 MPa (gauge pressure) while appropriately releasing the internal pressure, the drying was terminated when the temperature in the tank reached 60°C.

0061 The filtration tank was then introduced into a large glove box and the oxygen or moisture in the inside was sufficiently expelled by flowing a nitrogen gas therethrough over night. Thereafter, the filtration tank was opened in the glove box, and the produced nitrogen-containing silane compound powder was taken out. The reaction proceeded quantitatively, and the amount collected was 26.0 g.

0062

<Example 2>

The reaction, filtration, washing and drying were preformed by the same operations as in Example 1 except for changing the amount of liquid ammonia charged at the reaction to 1.5 L. During the supply of SiCl$_4$, the temperature of the reaction mixture was from 18 to 21°C, the pressure in the reactor was from 0.7 to 0.8 MPa (gauge pressure), and the pressure of the supply piping reached 5.3 MPa (gauge pressure) at a maximum. The amount of the nitrogen-containing silane compound powder collected was 25.7 g.

0063

<Example 3>

The reaction, filtration, washing and drying were preformed by the same operations as in Example 1 except for changing the amount of liquid ammonia charged at the reaction to 0.7 L. During the supply of $SiCl_4$, the temperature of the reaction mixture was from 17 to 21°C, the pressure in the reactor was from 0.7 to 0.8 MPa (gauge pressure), and the pressure of the supply piping reached 6.3 MPa (gauge pressure) at a maximum. The amount of the nitrogen-containing silane compound powder collected was 24.3 g.
0064

<Example 4>

The reaction, filtration, washing and drying were preformed by the same operations as in Example 1 except for changing the SiCl4 supply piping to an SUS-made nozzle having an inner diameter of 0.5 mm. During the supply of $SiCl_4$, the temperature of the reaction mixture was from 20 to 24°C, the pressure in the reactor was from 0.8 to 0.9 MPa (gauge pressure), and the pressure of the supply piping reached 6.5 MPa (gauge pressure) at a maximum. The amount of the nitrogen-containing silane compound powder collected was 25.3 g.
0065

<Example 5>

The reaction, filtration, washing and drying were preformed by the same operations as in Example 1 except that the reaction temperature was controlled at a low temperature. During the supply of $SiCl_4$, the temperature of the reaction mixture was from 7 to 11°C, the pressure in the reactor was from 0.4 to 0.6 MPa (gauge pressure), and the pressure of the supply piping reached 5.4 MPa (gauge pressure) at a maximum. The amount of the nitrogen-containing silane compound powder collected was 25.6 g.
0066

<Example 6>

The reaction, filtration, washing and drying were preformed by the same operations as in Example 1 except that the reaction temperature was controlled at a slightly higher temperature. During the supply of $SiCl_4$, the temperature of the reaction mixture was from 28 to 31°C, the pressure in the reactor was from 1.0 to 1.1 MPa (gauge pressure), and the pressure of the supply piping reached 6.1 MPa (gauge pressure) at a maximum. The amount of the nitrogen-containing silane compound powder collected was 25.0 g.
0067

<Example 7>

The reaction, filtration, washing and drying were preformed by the same operations as in Example 1 except that at the supply of $SiCl_4$, a uniform solution obtained by mixing 50 mL of $SiCl_4$ and 25 mL of toluene was separately prepared and supplied at a volume flow rate of 3.8 mL/min. During the supply of the mixed solution, the temperature of the reaction mixture was from 19 to 22°C, the pressure in the reactor was from 0.7 to 0.8 MPa (gauge pressure), and the pressure of the supply piping reached 5.4 MPa (gauge pressure) at a maximum. The amount of the nitrogen-containing silane compound powder collected was 25.6 g.
0068

<Example 8>

The reaction, filtration, washing and drying were preformed by the same operations as in Example 1 except that at the supply of $SiCl_4$, a uniform solution obtained by mixing 50 mL of $SiCl_4$ and 50 mL of toluene was separately prepared and supplied at a volume flow rate of 5.0 mL/min. During the supply of the mixed solution, the temperature of the reaction mixture was from 17 to 20°C, the pressure in the reactor was from 0.7 to 0.8 MPa (gauge pressure), and the pressure of the supply piping reached 4.9 MPa (gauge pressure) at a maximum. The amount of the nitrogen-containing silane compound powder collected was 25.5 g.
0069

<Comparative Example 1>

The reaction, filtration, washing and drying were preformed by the same operations as in Example 1 except that at the supply of SiCl$_4$, a uniform solution obtained by mixing 50 mL of SiCl$_4$ and 100 mL of toluene was separately prepared and supplied at a volume flow rate of 7.5 mL/min. During the supply of the mixed solution, the temperature of the reaction mixture was from 18 to 20°C, the pressure in the reactor was from 0.7 to 0.8 MPa (gauge pressure), and the pressure of the supply piping reached 2.4 MPa (gauge pressure) at a maximum. The amount of the nitrogen-containing silane compound powder collected was 25.6 g.

0070 The reaction conditions and the others in Examples 1 to 8 and Comparative Example 1 are shown together in Table 1. In Table 1, the differential pressure in the item of SiCl$_4$ supply pressure is calculated according to formula 2 and indicative of the discharge pressure which should be ensured in the pump used for the supply of SiCl$_4$ when practicing the present invention. Also, the amount of toluene per collected amount is determined according to formula 3 and indicative of the amount of toluene which should be recovered under the condition of the same production amount.

0071

$$\text{Differential pressure (Pa) = maximum value of SiCl}_4$$
$$\text{supply pressure (gauge pressure) } - \text{ minimum value of}$$
$$\text{reaction pressure (gauge pressure)}$$
$$\text{(formula 2)}$$

0072

$$\text{Amount (mL/g) of toluene per collected amount =}$$
$$\text{amount (mL) of toluene used in reaction step/weight (g)}$$
$$\text{of nitrogen-containing silane compound powder collected}$$
$$\text{(formula 3)}$$

0073

Table 1

| | Toluene/ SiCl$_4$ | SiCl$_4$/ NH$_3$ | Reaction Temperature (°C) | Reaction Pressure (MPa) | Supply of Toluene/SiCl$_4$ Mixed Solution | | | Amount of Collected Product (g) | Amount of Toluene per Collected Product (mL/g) |
|---|---|---|---|---|---|---|---|---|---|
| | | | | | Linear Velocity (cm/s) | Supply Pressure (MPa) | | | |
| | | | | | | Maximum Value | Differentia 1 Pressure | | |
| Example 1 | 0 | 0.05 | 18-20 | 0.7-0.8 | 8.3 | 5.7 | 5.0 | 26.0 | 0 |
| Example 2 | 0 | 0.03 | 18-21 | 0.7-0.8 | 8.3 | 5.3 | 4.6 | 25.7 | 0 |
| Example 3 | 0 | 0.07 | 17-21 | 0.7-0.8 | 8.3 | 6.3 | 5.6 | 24.3 | 0 |
| Example 4 | 0 | 0.05 | 20-24 | 0.8-0.9 | 21.2 | 6.5 | 5.7 | 25.3 | 0 |
| Example 5 | 0 | 0.05 | 7-11 | 0.4-0.6 | 8.3 | 5.4 | 5.0 | 25.6 | 0 |
| Example 6 | 0 | 0.05 | 28-31 | 1.0-1.1 | 8.3 | 6.1 | 5.1 | 25.0 | 0 |
| Example 7 | 0.5 | 0.05 | 19-22 | 0.7-0.8 | 12.6 | 5.4 | 4.7 | 25.6 | 1.0 |
| Example 8 | 1 | 0.05 | 17-20 | 0.7-0.8 | 16.6 | 4.9 | 4.2 | 25.5 | 2.0 |
| Comparative Example 1 | 2 | 0.05 | 18-20 | 0.7-0.8 | 24.9 | 2.4 | 1.7 | 25.6 | 3.9 |

0074 Analysis results of the nitrogen-containing silane compound powders mainly composed of silicon diimide, obtained in Examples 1 to 8 and Comparative Example 1, are shown together in Table 2. The apparent density was measured in accordance with JIS K5101. The specific surface area was determined using Shimadzu Flowsorb Model II2300 by the BET single-point method. The Cl content was determined by hydrolyzing the product powder, thereby eluting the Cl portion in the liquid phase, and performing the quantitative analysis by ion chromatography. The toluene contained in the product powder was extracted with n-hexane, and the concentration of toluene contained was then measured by gas chromatography. The carbon content was measured using a carbon analyzer, Model WR-12, manufactured by LECO by the combustion-thermal conductivity method.

0075

Table 2

|  | Apparent Density (g/cm$^3$) | Specific Surface Area (m$^2$/g) | Cl Content (ppm) | Toluene Content (ppm) | Carbon Content (wt%) |
|---|---|---|---|---|---|
| Example 1 | 0.18 | 899 | 374 | no use of toluene | not detected |
| Example 2 | 0.17 | 956 | 319 | no use of toluene | not detected |
| Example 3 | 0.23 | 998 | 456 | no use of toluene | not detected |
| Example 4 | 0.20 | 902 | 421 | no use of toluene | not detected |
| Example 5 | 0.21 | 898 | 349 | no use of toluene | not detected |
| Example 6 | 0.17 | 998 | 421 | no use of toluene | not detected |
| Example 7 | 0.15 | 884 | 382 | 108 | 0.01 |
| Example 8 | 0.13 | 897 | 292 | 153 | 0.01 |
| Comparative Example 1 | 0.08 | 869 | 408 | 414 | 0.04 |

0076 As seen from the results in Tables 1 and 2, when based on the method of the present invention, $SiCl_4$ is supplied without using a solvent or as a solution after dilution with a small amount of toluene and reacted with ammonia, the obtained nitrogen-containing silane compound mainly composed of silicon diimide is remarkably increased in the apparent density and contains no carbon. Also, as the amount of the solvent toluene is increased, the apparent density of the obtained nitrogen-containing silane compound is decreased, and when the volume ratio of $SiCl_4$ and toluene is 1:1, the apparent density is 0.13 g/cm$^3$ and large, but when the volume ratio of $SiCl_4$ and toluene is 1:2, the apparent density is abruptly decreased to 0.08 g/cm$^3$ and at the same time, the carbon content is significantly increased. By using a nitrogen-containing silane compound powder having a large apparent density as obtained in Examples, the volume efficiency in the heating step can be greatly improved and the productivity in the production of a silicon nitride powder can be enhanced. For example, in the case of using the nitrogen-containing silane compound powder of Example 1, when the heating crucible has the same volume, 2.3-fold weight based on the powder obtained in Comparative Example 1 can be filled, and when the production amount is the same, the volume of the heating crucible can be reduced to 1/2.3 compared with the case of using the powder obtained in Comparative Example 1. In addition, in the case of supplying $SiCl_4$ without using a solvent, the organic solvent-recovering step itself is not required and even in the case of supplying it as a toluene solution having an $SiCl_4$ concentration of 50 vol% or more, the amount of toluene which should be recovered per production amount of the nitrogen-containing silane compound is greatly decreased and in turn, the step for recovering an organic solvent can be downscaled. According to the method of the present invention, thanks to a series of effects described above, the productivity in the production of silicon nitride can be greatly increased.

0077

<Example 11>

In the reaction, an SUS-made pressure-resistant reactor with a jacket, which is equipped with a stirring device and has an inner volume of about 2 L, was used. After purging the inside of the reactor with a nitrogen gas, 1 L of liquid ammonia was charged thereinto, and a nitrogen gas was then introduced into the reactor. The introduction of a nitrogen gas was adjusted to give a nitrogen gas partial pressure of 1.2 MPa in the reactor. While stirring the liquid ammonia in the reactor by rotating the stirring blade at 400 rpm, 50 mL of $SiCl_4$ which was not diluted with an organic solvent was supplied by a pump and subjected to a reaction in a batch system. A refrigerant was appropriately circulated into the jacket while monitoring the temperature in the reactor. An SUS-made nozzle having an inner diameter of 0.8 mm, disposed in the liquid ammonia, was used for the supply of $SiCl_4$. When the upper limit of discharge pressure of the pump was set to 8.8 MPa (gauge pressure) and the volume flow rate was set to 2.5 mL/min, the entire amount of 50 mL of $SiCl_4$ could be supplied without causing nozzle clogging. During the supply of $SiCl_4$, the temperature of the reaction mixture was from 16 to 20°C, the pressure in the reactor was from 1.9 to 2.0 MPa (gauge pressure), and, and the pressure of the supply piping reached 8.4 MPa (gauge pressure) at a maximum.

0078 After the completion of reaction, the produced slurry was transferred to an SUS-made pressure-resistant vessel with a jacket, which is equipped with a stirring device and a sintered metal filter and has an inner volume of about 2 L, and filtered (Nutche type). The volume above the sintered metal filter was about 1.5 L. The obtained wet cake was further batch-washed with about 1 L of liquid ammonia and then filtered. This washing/filtration operation was repeated 7 times in total. The total amount of liquid ammonia required for the washing was 7,670 mL.

0079 The thus-obtained wet cake was dried to obtain a nitrogen-containing silane compound powder. In the drying operation, the cake was heated by flowing hot water at 90°C through the jacket of the filtration tank and by keeping the pressure in the tank at 0.6 MPa (gauge pressure) while appropriately releasing the internal pressure, the drying was terminated when the temperature in the tank reached 60°C.

0080 The filtration tank was then introduced into a large glove box and the oxygen or moisture in the inside was sufficiently expelled by flowing a nitrogen gas therethrough over night. Thereafter, the filtration tank was opened in the glove box, and the produced nitrogen-containing silane compound powder was recovered. The reaction proceeded quantitatively, and the amount collected was 26.3 g.

0081

<Example 12>

The reaction, filtration, washing and drying were preformed by the same operations as in Example 11 except for changing the amount of liquid ammonia charged at the reaction to 1.5 L and adjusting the partial pressure of nitrogen gas introduced into the reactor to 1.3 MPa. During the supply of $SiCl_4$, the temperature of the reaction mixture was from 17 to 20°C, the pressure in the reactor was from 2.0 to 2.1 MPa (gauge pressure), and the pressure of the supply piping reached 8.1 MPa (gauge pressure) at a maximum. The reaction proceeded quantitatively, and the amount of the nitrogen-containing silane compound powder collected was 25.5 g. Also, the amount of liquid ammonia required for the washing was 7,480 mL.

0082

<Example 13>

The reaction, filtration, washing and drying were preformed by the same operations as in Example 11 except for changing the amount of liquid ammonia charged at the reaction to 0.7 L. During the supply of $SiCl_4$, the temperature of the reaction mixture was from 16 to 23°C, the pressure in the reactor was from 1.9 to 2.1 MPa (gauge pressure), and the pressure of the supply piping reached 7.1 MPa (gauge pressure) at a maximum. The reaction proceeded quantitatively, and the amount of the nitrogen-containing silane compound powder collected was 25.6 g. Also, the amount of liquid ammonia required for the washing was 7,380 mL.

0083

<Example 14>

The reaction, filtration, washing and drying were preformed by the same operations as in Example 11 except for adjusting the partial pressure of nitrogen gas introduced into the reactor to 0.7 MPa. During the supply of $SiCl_4$, the temperature of the reaction mixture was from 19 to 21°C, the pressure in the reactor was from 1.4 to 1.5 MPa (gauge pressure), and the pressure of the supply piping reached 7.7 MPa (gauge pressure) at a maximum. The reaction proceeded quantitatively, and the amount of the nitrogen-containing silane compound powder collected was 25.7 g. Also, the amount of liquid ammonia required for the washing was 7,410 mL.

0084

<Example 15>

The reaction, filtration, washing and drying were preformed by the same operations as in Example 11 except for adjusting the partial pressure of nitrogen gas introduced into the reactor to 2.0 MPa. During the supply of $SiCl_4$, the temperature of the reaction mixture was from 18 to 21°C, the pressure in the reactor was from 2.7 to 2.8 MPa (gauge pressure), and the pressure of the supply piping reached 7.2 MPa (gauge pressure) at a maximum. The reaction proceeded quantitatively, and the amount of the nitrogen-containing silane compound powder collected was 26.9 g. Also, the amount of liquid ammonia required for the washing was 7,520 mL.

0085

<Example 16>

The reaction, filtration, washing and drying were preformed by the same operations as in Example 11 except that the liquid ammonia charged into the reactor was previously cooled to near 2°C and the partial pressure of nitrogen gas introduced into the reactor was adjusted to 2.1 MPa. During the supply of SiCl$_4$, the temperature of the reaction mixture was from 2 to 4°C, the pressure in the reactor was from 2.4 to 2.5 MPa (gauge pressure), and the pressure of the supply piping reached 5.5 MPa (gauge pressure) at a maximum. The reaction proceeded quantitatively, and the amount of the nitrogen-containing silane compound powder collected was 26.9 g. Also, the amount of liquid ammonia required for the washing was 7,600 mL.

0086

<Example 17>

The reaction, filtration, washing and drying were preformed by the same operations as in Example 11 except that the liquid ammonia charged into the reactor was previously heated to near 25°C and the partial pressure of nitrogen gas introduced into the reactor was adjusted to 1.3 MPa. During the supply of SiCl$_4$, the temperature of the reaction mixture was from 26 to 31°C, the pressure in the reactor was from 2.2 to 2.4 MPa (gauge pressure), and the pressure of the supply piping reached 5.4 MPa (gauge pressure) at a maximum. The reaction proceeded quantitatively, and the amount of the nitrogen-containing silane compound powder collected was 27.1 g. Also, the amount of liquid ammonia required for the washing was 7,650 mL.

0087

<Example 18>

The reaction, filtration, washing and drying were preformed by the same operations as in Example 11 except that at the supply of SiCl$_4$, a uniform solution obtained by mixing 50 mL of SiCl$_4$ and 17 mL of toluene was separately prepared and supplied at a volume flow rate of 3.3 mL/min. During the supply of the mixed solution, the temperature of the reaction mixture was from 16 to 20°C, the pressure in the reactor was from 2.2 to 2.4 MPa (gauge pressure), and the pressure of the supply piping reached 7.8 MPa (gauge pressure) at a maximum. The reaction proceeded quantitatively, and the amount of the nitrogen-containing silane compound powder collected was 26.2 g. Also, the amount of liquid ammonia required for the washing was 7,410 mL.

0088

<Example 19>

The reaction, filtration, washing and drying were preformed by the same operations as in Example 11 except that the partial pressure of nitrogen gas introduced into the reactor was adjusted to 1.3 MPa and at the supply of SiCl$_4$, a uniform solution obtained by mixing 50 mL of SiCl$_4$ and 50 mL of toluene was separately prepared and supplied at a volume flow rate of 5.0 mL/min. During the supply of the mixed solution, the temperature of the reaction mixture was from 17 to 21°C, the pressure in the reactor was from 2.0 to 2.1 MPa (gauge pressure), and the pressure of the supply piping reached 4.9 MPa (gauge pressure) at a maximum. The reaction proceeded quantitatively, and the amount of the nitrogen-containing silane compound powder collected was 26.5 g. Also, the amount of liquid ammonia required for the washing was 7,490 mL.

0089

<Example 20 (comparison to Example 11)>

The reaction was attempted by the same operation as in Example 11 except for not introducing a nitrogen gas into the reactor and not increasing the pressure. During the supply of the mixed solution, the temperature of the reaction mixture was from 18 to 20°C, the pressure in the reactor was from 0.7 to 0.8 MPa (gauge pressure), and the pressure of the supply piping reached 5.7 MPa (gauge pressure) at a maximum. The reaction proceeded quantitatively, and the amount of the nitrogen-containing silane compound powder collected was 26.0 g. Also, the amount of liquid ammonia required for the washing was 7,680 mL.

0090

<Example 21 (comparison to Example 11)>

The reaction, filtration, washing and drying were preformed by the same operations as in Example 11 except for adjusting the partial pressure of nitrogen gas introduced into the reactor to 0.3 MPa. During the supply of SiCl$_4$, the temperature of the reaction mixture was from 18 to 20°C, the pressure in the reactor was from 1.0 to 1.1 MPa (gauge pressure), and the pressure of the supply piping reached 6.9 MPa (gauge pressure) at a maximum. The reaction proceeded quantitatively, and the amount of the nitrogen-containing silane compound powder collected was 25.8 g. Also, the amount of liquid ammonia required for the washing was 7,330 mL.

0091 The reaction conditions and the others in Examples 11 to 19 and Examples 20 and 21 are shown together in Table 3. In Table 3, ΔP in the item of reaction pressure indicates the partial pressure of nitrogen gas introduced into the reactor. Also, the differential pressure in the item of SiCl$_4$ supply pressure is calculated according to the following formula 4 and indicative of the discharge pressure which should be ensured in the pump used for the supply of SiCl$_4$ when practicing the present invention.

0092

```
Differential pressure (MPa) = [maximum value of SiCl4
supply pressure (gauge pressure)] - [minimum value of
reaction tank pressure (gauge pressure)]
                                        (formula 4)
```

0093

Table 3

| | | Toluene/SiCl$_4$ Mixed Solution | | ΔP (MPa) | Reaction Temperature (°C) | Reaction Pressure (MPa) | SiCl$_4$ Supply Pressure (MPa) | | Volume Ratio SiCl$_4$/NH$_3$ |
|---|---|---|---|---|---|---|---|---|---|
| | | Volume Ratio | Linear Velocity (cm/s) | | | | Maximum Value | Differential Pressure | |
| Example 11 | | 0 | 8.3 | 1.2 | 16-20 | 1.9-2.0 | 8.4 | 6.6 | 0.05 |
| Example 12 | | 0 | 8.3 | 1.3 | 17-20 | 2.0-2.1 | 8.1 | 6.2 | 0.03 |
| Example 13 | | 0 | 8.3 | 1.2 | 16-23 | 1.9-2.1 | 7.1 | 5.2 | 0.07 |
| Example 14 | | 0 | 8.3 | 0.7 | 19-21 | 1.4-1.5 | 7.7 | 6.3 | 0.05 |
| Example 15 | | 0 | 8.3 | 2.0 | 18-21 | 2.7-2.8 | 7.2 | 4.5 | 0.05 |
| Example 16 | | 0 | 8.3 | 2.1 | 2-4 | 2.4-2.5 | 5.5 | 3.0 | 0.05 |
| Example 17 | | 0 | 8.3 | 1.3 | 26-31 | 2.2-2.4 | 5.4 | 3.1 | 0.05 |
| Example 18 | | 0.3 | 10.9 | 1.2 | 16-20 | 1.9-2.0 | 7.8 | 6.0 | 0.05 |
| Example 19 | | 1 | 16.6 | 1.3 | 17-21 | 2.0-2.1 | 4.9 | 2.9 | 0.05 |
| Example 20 | | 0 | 8.3 | 0.0 | 18-20 | 0.7-0.8 | 5.7 | 5.0 | 0.05 |
| Example 21 | | 0 | 8.3 | 0.3 | 18-20 | 1.0-1.1 | 6.9 | 5.9 | 0.05 |

0094 Analysis results of the products of Examples 11 to 19 and Examples 20 and 21 are shown together in Table 4. In the analysis of the obtained product, the apparent density was measured in accordance with JIS K5101. The specific surface area was determined using Shimadzu Flowsorb Model II2300 by the BET single-point method. The Cl content was determined by hydrolyzing the product powder, thereby eluting the Cl portion in the liquid phase, and performing the quantitative analysis by ion chromatography. The toluene contained in the product powder was extracted with n-hexane, and the concentration of toluene contained was then measured by gas chromatography. The carbon content was measured using a carbon analyzer, Model WR-12, manufactured by LECO by the combustion-thermal conductivity method.

0095

Table 4

|  | Apparent Density (g/cm$^3$) | Specific Surface Area (m$^2$/g) | Cl Content (ppm) | Toluene Content (ppm) | Carbon Content (wt%) |
|---|---|---|---|---|---|
| Example 11 | 0.20 | 1126 | 32 | - | not detected |
| Example 12 | 0.18 | 1125 | 55 | - | not detected |
| Example 13 | 0.18 | 1189 | 80 | - | not detected |
| Example 14 | 0.20 | 1090 | 52 | - | not detected |
| Example 15 | 0.14 | 1177 | 68 | - | not detected |
| Example 16 | 0.20 | 958 | 29 | - | not detected |
| Example 17 | 0.14 | 1175 | 52 | - | not detected |
| Example 18 | 0.16 | 1163 | 47 | 92 | 0.01 |
| Example 19 | 0.13 | 1099 | 58 | 131 | 0.01 |
| Example 20 | 0.18 | 899 | 374 | - | not detected |
| Example 21 | 0.20 | 1013 | 243 | - | not detected |

0096 As seen from Table 4, under the condition of supplying halogenated silane without using a solvent or as a solution after dilution with a small amount of an organic solvent, by introducing an inert gas into the reactor to apply pressure, a nitrogen-containing silane compound powder having a large apparent density and a high purity with a halogen portion of 100 ppm or less is obtained. On the other hand, as seen from Examples 20 and 21, when an inert gas is not introduced or pressurization by the introduction is insufficient, the apparent density is large but the removal by washing of the halogen portion becomes difficult and a highly-pure product cannot be obtained.

0097

<Example 22>

The reaction, filtration, washing and drying were preformed by the same operations as in Example 11 except that a calandria-type internal heat exchanger was disposed in a reaction tank, the supply of SiCl$_4$ was performed by a spray nozzle manufactured by H. Ikeuchi & Co., Ltd., the SiCl$_4$ supply flow rate was set to 19 mL/min, and the stirring rotation speed was set to 600 rpm. The model number of the spray nozzle used, manufactured by H. Ikeuchi & Co., Ltd, was 1/4MKB80063NS303-RW. During the supply of SiCl$_4$, the temperature of the reaction mixture was from 20 to 36°C, the pressure in the reactor was from 2.0 to 2.5 MPa (gauge pressure), and the pressure of the supply piping reached 7.3 MPa (gauge pressure) at a maximum. The reaction proceeded quantitatively, and the amount of the nitrogen-containing silane compound powder collected was 26.1 g. Also, the amount of liquid ammonia required for the washing was 7,270 mL.

0098

<Comparative Example 11>

The same operations as in Example 22 were performed except that a spray nozzle for the supply of $SiCl_4$ was disposed in the gas phase part at a height of 2 cm from the liquid level of liquid ammonia charged into the reactor and the partial pressure of nitrogen gas introduced into the reactor was adjusted to 0.3 MPa. During the supply of $SiCl_4$, the temperature of the reaction mixture was from 17 to 22°C, the pressure in the reactor was from 2.0 to 2.1 MPa (gauge pressure), and the pressure of the supply piping reached 4.9 MPa (gauge pressure) at a maximum. The reaction proceeded quantitatively, and the amount of the nitrogen-containing silane compound powder collected was 24.9 g. Also, the amount of liquid ammonia required for the washing was 7,150 mL.

0099 The reaction conditions and the others in Example 22 and Comparative Example 11 are shown together in Table 5. In Table 5, ΔP in the item of reaction pressure and the differential pressure in the item of $SiCl_4$ supply pressure have the same definitions as in Table 3.

0100

Table 5

| | ΔP (MPa) | Reaction Temperature (°C) | Reaction Pressure (MPa) | $SiCl_4$ Supply Pressure (MPa) | | Volume Ratio $SiCl_4/NH_3$ |
| --- | --- | --- | --- | --- | --- | --- |
| | | | | Maximum Value | Differential Pressure | |
| Example 22 | 1.2 | 20-36 | 2.0-2.5 | 7.3 | 5.3 | 0.05 |
| Comparative Example 11 | 1.3 | 17-22 | 2.0-2.1 | 4.9 | 2.9 | 0.05 |

0101 Analysis results of the products of Example 22 and Comparative Example 11 are shown together in Table 6.

0102

Table 6

| | Apparent Density (g/cm³) | Specific Surface Area (m²/g) | Cl Content (ppm) | Toluene Content (ppm) | Carbon Content (wt%) |
| --- | --- | --- | --- | --- | --- |
| Example 22 | 0.15 | 1166 | 74 | - | not detected |
| Comparative Example 11 | 0.14 | 821 | 15211 | - | not detected |

0103 As seen from Table 6, when the discharge port for $SiCl_4$ supply was disposed in the gas phase space and the production was performed in a mode of including the reaction with gaseous ammonia present in a ratio according to the partial pressure, the Cl content was seriously changed for the worse. This reveals that in the production under the condition allowing a large amount of gaseous ammonia to be present in the reaction field, the halogen portion in a form that cannot be removed by the washing with liquid ammonia is greatly increased.

0104

<Example 23>

The reaction, filtration, washing and drying were preformed by the same operations as in Example 11 except that the amount of liquid ammonia charged was 1,730 mL, the total amount of $SiCl_4$ supplied was 101 mL, the $SiCl_4$ supply flow rate was 5 mL/min, and the repeated times of the washing operation with liquid ammonia was 9 in total. During the supply of $SiCl_4$, the temperature of the reaction mixture was from 16 to 21°C, the pressure in the reactor was from 1.9 to 2.0 MPa (gauge pressure), and the pressure of the supply piping reached 9.6 MPa (gauge pressure) at a maximum. The reaction proceeded quantitatively, and the amount of the nitrogen-containing silane compound powder collected was 56.2 g. The amount of filtrate when the slurry after the reaction was filtered was $1.20 \times 10^3$ mL, and the amount of liquid ammonia consumed by the reaction was determined by chemical equation 2 on the basis of the charge amount of $SiCl_4$ and found to be 147 mL. From these, the amount of filtrate (corresponding to $V_V$ in formula 1) in the filtercake was calculated to be $3.8 \times 10^2$ mL. Also, the amount of liquid ammonia required for the washing was 9,400 mL.

0105

$$SiCl_4 + 6NH_3 \rightarrow Si(NH)_2 + 4NH_4Cl \qquad (2)$$

0106

<Comparative Example 12>

The reaction, filtration, washing and drying were preformed by the same operations as in Example 11 except that the pressure was not increased without introducing a nitrogen gas into the reactor; the amount of liquid ammonia charged was 1,060 mL; at the supply of $SiCl_4$, a uniform solution obtained by mixing 50 mL of $SiCl_4$ and 150 mL of toluene was separately prepared and supplied at a volume flow rate of 10.0 mL/min; and the repeated times of the washing operation with liquid ammonia was 9 in total. During the supply of the mixed solution, the temperature of the reaction mixture was from 16 to 21°C, the pressure in the reactor was from 0.7 to 0.8 MPa (gauge pressure), and the pressure of the supply piping reached 3.2 MPa (gauge pressure) at a maximum. The reaction proceeded quantitatively, and the amount of the nitrogen-containing silane compound powder collected was 26.0 g. The amount of filtrate when the slurry after the reaction was filtered was $6.7 \times 10^2$ mL, and the amount of liquid ammonia consumed by the reaction was determined according to chemical formula 2 on the basis of the charge amount of $SiCl_4$ and found to be 73 mL. From these, the amount of filtrate (corresponding to $V_V$ in formula 1) in the filtercake was calculated to be $4.7 \times 10^2$ mL. Also, the amount of liquid ammonia required for the washing was 9,080 mL.

0107 The reaction conditions and the others in Example 23 and Comparative Example 12 are shown together in Table 7, and the results of filtration and washing are shown together in Table 8. In Table 7, $\Delta P$ in the item of reaction pressure and the differential pressure in the item of $SiCl_4$ supply pressure have the same definitions as in Table 3.

Table 7

| | Toluene/SiCl$_4$ Mixed Solution | | ΔP (MPa) | Reaction Temperature (°C) | Reaction Pressure (MPa) | SiCl$_4$ Supply Pressure (MPa) | | Volume Ratio SiCl$_4$/NH$_3$ |
|---|---|---|---|---|---|---|---|---|
| | Volume Ratio | Linear Velocity (cm/s) | | | | Maximum Value | Differential Pressure | |
| Example 23 | 0 | 16.6 | 1.2 | 16-21 | 1.9-2.0 | 9.6 | 7.8 | 0.06 |
| Comparative Example 12 | 3 | 33.2 | 0.0 | 16-21 | 0.7-0.8 | 3.2 | 2.6 | 0.05 |

Table 8

| | Charge Amount (mL) | | Amount of NH$_3$ Consumed (mL) | Amount of Filtrate (mL) | Amount of Filtrate Held in Cake (mL) | Amount of NH$_3$ for Washing (mL) | Amount of Collected Product (g) | Amount of NH$_3$ for Washing/ Amount of Collected Product (mL/g) |
|---|---|---|---|---|---|---|---|---|
| | NH$_3$ | Toluene | | | | | | |
| Example 23 | 1730 | 0 | 147 | $1.2 \times 10^3$ | $3.8 \times 10^2$ | 9400 | 56.2 | 167 |
| Comparative Example 12 | 1060 | 150 | 73 | $6.7 \times 10^2$ | $4.7 \times 10^2$ | 9080 | 26 | 349 |

0109 Analysis results of the products of Example 23 and Comparative Example 12 are shown together in Table 9.
0110

Table 9

| | Apparent Density (g/cm$^3$) | Specific Surface Area (m$^2$/g) | Cl Content (ppm) | Toluene Content (ppm) | Carbon Content (wt%) |
|---|---|---|---|---|---|
| Example 23 | 0.20 | 1161 | 60 | - | not detected |
| Comparative Example 12 | 0.07 | 914 | 116 | 379 | 0.05 |

0111 As apparent from Tables 7 to 9, in the nitrogen-containing silane compound of the present invention, the apparent density is greatly increased, and this leads to reduced voids in the wet cake at the filtration/washing and therefore, amount of filtrate contained in the cake per the weight of cake is decreased. As a result, as seen in the item of amount of NH$_3$ for washing/amount collected in Table 8, a nitrogen-containing silane compound having high purity with a small amount of halogen impurity content can be obtained under the condition where the amount of liquid ammonia for washing per product is greatly reduced, and the efficiency in the washing step can be enhanced.

DESCRIPTION OF REFERENCE NUMERALS

0112

1 Conduit for supplying a halogenated silane or a mixed solution of a halogenated silane and an organic solvent
2 Conduit for supplying liquid ammonia
3 Conduit for supplying nitrogen gas
4 Stirring device
5 Sheath tube for thermometer
6 Back pressure regulating valve
7 Conduit for withdrawing the reaction mixture
8 Conduit for supplying refrigerant to jacket
9 Conduit for discharging refrigerant from jacket

Claims

1. A nitrogen-containing silane compound powder represented by the formula Si(NH$_x$)$_y$, wherein x is from 0.7 to 1.3 and y is from 1.8 to 2.2, obtained by reacting a halogenated silane compound and liquid ammonia and subjecting the reaction product to washing with liquid ammonia and drying, wherein the apparent density after said drying is from 0.10 to 0.30 g/cm$^3$, wherein the carbon content is less than 0.03 wt%.

2. The nitrogen-containing silane compound powder as claimed in claim 1, wherein the apparent density after said drying is from 0.12 to 0.25 g/cm$^3$.

3. The nitrogen-containing silane compound powder as claimed in claim 1 or 2, wherein the concentration of the halogen content contained in said powder is 100 ppm or less on a weight basis.

4. The nitrogen-containing silane compound powder as claimed in any one of claims 1 to 3, wherein the nitrogen-containing silane compound powder is silicon diimide.

5. A process for producing a nitrogen-containing silane compound powder represented by the formula Si(NH$_x$)$_y$, wherein x is from 0.7 to 1.3 and y is from 1.8 to 2.2, the process comprising, at the time of mixing and reacting a halogenated silane compound and liquid ammonia, supplying a halogenated silane compound without using a solvent or as an inert organic solvent solution having a halogenated silane compound concentration of 50 vol% or more by discharging it from a supply port disposed in liquid ammonia.

6. The process for producing a nitrogen-containing silane compound powder as claimed in claim 5, wherein the discharge linear velocity when supplying said halogenated silane compound without using a solvent or as an inert organic solvent solution having a halogenated silane compound concentration of 50 vol% or more is set to 5 cm/sec or more.

7. The process for producing a nitrogen-containing silane compound powder as claimed in claim 5 or 6, wherein the pressure in a reactor is maintained higher by 0.5 MPa or more than the vapor pressure of liquid ammonia at the temperature of the reaction mixture contained in said reactor by introducing an inert gas into said reactor.

**Patentansprüche**

1. Pulver einer stickstoffhaltigen Silanverbindung, repräsentiert durch die Formel Si(NH$_x$)$_y$, wobei x im Bereich von 0,7 bis 1,3 und y im Bereich von 1,8 bis 2,2 liegt, hergestellt durch die Reaktion einer halogenierten Silanverbindung und flüssigem Ammoniak sowie das Waschen des Reaktionsproduktes mit flüssigem Ammoniak und Trocknen, wobei die scheinbare Dichte nach dem Trocknen von 0,10 bis 0,30 g/cm$^3$ beträgt, wobei der Kohlenstoffgehalt kleiner als 0,03 Gew.% ist.

2. Pulver einer stickstoffhaltigen Silanverbindung nach Anspruch 1, wobei die scheinbare Dichte nach dem Trocknen von 0,12 bis 0,25 g/cm$^3$ beträgt.

3. Pulver einer stickstoffhaltigen Silanverbindung nach Anspruch 1 oder 2, wobei die Konzentration des Halogengehaltes in dem Pulver 100 ppm oder weniger auf Gewichtsbasis beträgt.

4. Pulver einer stickstoffhaltigen Silanverbindung nach einem der Ansprüche 1 bis 3, wobei das Pulver der stickstoffhaltigen Silanverbindung Siliciumdiimid ist.

5. Verfahren zur Herstellung eines Pulvers einer stickstoffhaltigen Silanverbindung, repräsentiert durch die Formel Si(NH$_x$)$_y$, wobei x im Bereich von 0,7 bis 1,3 und y im Bereich von 1,8 bis 2,2 liegt, wobei das Verfahren zum Zeitpunkt des Mischens und Reagierens einer halogenierten Silanverbindung und flüssigem Ammoniak die Zuführung einer halogenierten Silanverbindung ohne Verwendung eines Lösungsmittels oder als eine Lösung in einem inerten organischen Lösungsmittel mit einer Konzentration an halogenierter Silanverbindung von 50 Vol.% oder mehr umfasst, durch Freisetzen der halogenierten Silanverbindung aus einer in flüssigem Ammoniak angeordneten Zuführöffnung.

6. Verfahren zur Herstellung eines Pulvers einer stickstoffhaltigen Silanverbindung nach Anspruch 5, wobei die lineare Freisetzgeschwindigkeit beim Zuführen der halogenierten Silanverbindung ohne Verwendung eines Lösungsmittels oder als Lösung in einem inerten organischen Lösungsmittel mit einer Konzentration an halogenierter Silanverbindung von 50 Vol.% oder mehr, auf 5 cm/s oder mehr eingestellt wird.

7. Verfahren zur Herstellung eines Pulvers einer stickstoffhaltigen Silanverbindung nach Anspruch 5 oder 6, wobei der Druck in einem Reaktor um 0,5 MPa oder mehr über dem Dampfdruck des flüssigen Ammoniaks bei der Temperatur der in dem Reaktor enthaltenen Reaktionsmischung gehalten wird, durch Einführen eines Inertgases in den Reaktor.

**Revendications**

1. Poudre d'un composé de silane contenant de l'azote représenté par la formule $Si(NH_x)_y$, dans laquelle x est de 0,7 à 1,3 et y est de 1,8 à 2,2, obtenue par réaction d'un composé de silane halogéné et d'ammoniac liquide et soumission du produit réactionnel à un lavage avec de l'ammoniac liquide et un séchage, dans laquelle la densité apparente après ledit séchage est de 0,10 à 0,30 $g/cm^3$, et la teneur en carbone est inférieure à 0,03 % en poids.

2. Poudre d'un composé de silane contenant de l'azote selon la revendication 1, dans laquelle la densité apparente après ledit séchage est de 0,12 à 0,25 $g/cm^3$.

3. Poudre d'un composé de silane contenant de l'azote selon la revendication 1 ou 2, dans laquelle la concentration de la teneur en halogène contenue dans ladite poudre est de 100 ppm ou moins sur une base pondérale.

4. Poudre d'un composé de silane contenant de l'azote selon l'une quelconque des revendications 1 à 3, dans laquelle la poudre du composé de silane contenant de l'azote est le diimide de silicium.

5. Procédé de production d'une poudre d'un composé de silane contenant de l'azote représenté par la formule $Si(NH_x)_y$, dans laquelle x est de 0,7 à 1,3 et y est de 1,8 à 2,2, le procédé comprenant, au moment du mélange et de la réaction d'un composé de silane halogéné et de l'ammoniac liquide, l'introduction d'un composé de silane halogéné sans utiliser de solvant ou sous la forme d'une solution de solvant organique inerte ayant une concentration en composé de silane halogéné de 50 % vol. ou plus par déversement de celui-ci à partir d'un orifice d'alimentation débouchant dans l'ammoniac liquide.

6. Procédé de production d'une poudre d'un composé de silane contenant de l'azote selon la revendication 5, dans lequel la vitesse linéaire de déversement lors de l'introduction dudit composé de silane halogéné sans utiliser de solvant ou sous la forme d'une solution de solvant organique inerte ayant une concentration de composé de silane halogéné de 50 % vol. ou plus est fixée à 5 cm/sec ou plus.

7. Procédé de production d'une poudre d'un composé de silane contenant de l'azote selon la revendication 5 ou 6, dans lequel la pression dans un réacteur est maintenue plus élevée de 0,5 MPa ou plus par rapport à la pression de vapeur de l'ammoniac liquide à la température du mélange réactionnel contenu dans ledit réacteur par introduction d'un gaz inerte dans ledit réacteur.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 3235304 A1
- US 4788049 A
- EP 0228842 A2
- JP 3077870 B
- JP 3475614 B
- JP 3550919 B
- JP 62223008 A
- JP 4265211 A
- JP 5059186 A
- JP 7223811 A
- JP 61011886 A

**Non-patent literature cited in the description**

- Kagaku Kogaku Binran (Chemical Engineering Handbook). The Society of Chemical Engineers, 707-708